Europäisches Patentamt

European Patent Office

Office européen des brevets

(19)

(11) Numéro de publication: **0 021 950**
**B1**

(12) **FASCICULE DE BREVET EUROPEEN**

(45) Date de publication du fascicule du brevet: **13.04.83**

(51) Int. Cl.³: **B 62 D 5/06**

(21) Numéro de dépôt: **80400843.1**

(22) Date de dépôt: **10.06.80**

(54) **Direction assistée pour véhicule automobile.**

(30) Priorité: **22.06.79 FR 7916131**

(43) Date de publication de la demande:
**07.01.81 Bulletin 81/1**

(45) Mention de la délivrance du brevet:
**13.04.83 Bulletin 83/15**

(84) Etats contractants désignés:
**DE GB IT SE**

(56) Documents cités:
**FR - A - 2 193 938**
**FR - A - 2 288 023**

(73) Titulaire: **SOCIETE ANONYME AUTOMOBILES CITROEN**
**117 à 167, Quai André Citroen**
**F-75747 Paris Cedex 15 (FR)**

(73) Titulaire: **AUTOMOBILES PEUGEOT**
**75, avenue de la Grande Armée**
**F-75116 Paris (FR)**

(72) Inventeur: **Perineau, Jean Gérard**
**20, rue des Marronniers**
**F-94260 Fresnes (FR)**

(74) Mandataire: **Michardière, Bernard et al,**
**Cabinet Plasseraud 84, rue d'Amsterdam**
**F-75009 Paris (FR)**

Courier Press, Leamington Spa, England.

Direction assistée pour véhicule automobile

L'invention est relative à des perfectionnements apportés aux directions assistées, pour véhicules automobiles, à arbre de commande rotatif, propre à entraîner un pignon coopérant avec un crémaillère, du genre de celles qui comportent:

— premièrement, un distributeur de fluide sous pression pour la commande d'un moteur d'assistance du déplacement de la crémaillère, lequel distributeur comprend un tiroir coulissant, coaxial au pignon, et situé du côté opposé à l'arbre;

— deuxièmement, un moyen de liaison reliant une extrémité du tiroir à une pièce liée en rotation audit arbre, ladite pièce étant propre à coopérer, lors de la rotation, avec une surface d'appui immobile suivant la direction de l'axe du pignon et inclinée par rapport à cet axe, de telle sorte que la pièce citée se déplace axialement en réponse à un mouvement de rotation de l'arbre;

— troisièmement, des moyens élastiques à double effet, pour le rappel du tiroir en position neutre, agencés sous la forme d'au moins un ressort disposé entre l'un des éléments constitués par le moyen de liaison ou la pièce, et une butée fixe suivant la direction de l'axe du pignon, l'ensemble étant tel que le tiroir et l'articulation ne sont pas soumis à l'effort du ressort.

L'invention concerne plus particulièrement, parce que c'est dans ce cas que son application semble devoir présenter le plus d'intérêt, mais non exclusivement, les directions assistées pour véhicules automobiles disposant d'une source de fluide hydraulique à haute pression.

Le document FR—A 2 288 023 montre une direction assistée de ce genre. Les moyens élastiques, à double effet, du tiroir ne sont pas soumis au couple de manoeuvre, ce qui est avantageux. Toutefois, l'agencement de la direction, conforme à ce document, nécessite un tiroir formé par une vanne de commutation en forme de manchon creux, de diamètre relativement important; en outre, les moyens élastiques de rappel du tiroir sont formés par plusieurs ressorts disposés radialement à l'extérieur du tiroir, de telle sorte que la construction est relativement encombrante et compliquée.

L'invention a pour but, surtout, tout en conservant aux directions assistées du genre en question leurs avantages habituels, de rendre ces directions telles qu'elles soient d'un encombrement plus réduit, notamment en raison du faible diamètre du tiroir, et d'une construction simple et fiable.

Selon l'invention, une direction assistée à arbre de commande rotatif propre à entraîner un pignon coopérant avec une crémaillère, du genre défini précédemment, est caractérisée par le fait que:

— premièrement, le moyen de liaison est une tige traversant axialement le pignon, et la tige relie, notamment par une articulation, l'extrémité du tiroir à la pièce susdite et que,

— deuxièmement, la pièce est formée par un axe transversal propre à coopérer, notamment par l'intermédiaire de galets, avec une fourche d'entraînement solidaire de l'arbre de commande, cet axe se prolongeant radialement au-delà de l'arbre de commande pour coopérer, notamment par l'intermédiaire d'un galet, avec la susdite surface d'appui formée par les bords inclinés par rapport à l'axe du pignon, d'une lumière prévue dans un organe immobile suivant la direction axiale du pignon,

— troisièmement, le pignon est bloqué axialement et la surface d'appui susdite est notamment formée par les bords inclinés de la lumière prévue dans une partie tubulaire du corps de pignon et,

— quatrièmement, les moyens élastiques à double effet sont constitués par un seul ressort.

Avantageusement, le ressort à double effet est monté entre deux coupelles coulissant librement par rapport au susdit élément (tige ou pièce) et disposées axialement d'une part entre deux zones de butée, fixes suivant la direction de l'axe du pignon, et situées radialement vers l'extérieur, et d'autre part entre deux zones d'appui liées axialement audit élément, et situées radialement vers l'intérieur.

De préférence, le ressort entoure la tige de liaison.

L'invention sera mieuse comprise à l'oúde d'un mode de réalisation particulier décrit avec réference au dessin ci-annexé, mais qui n'est nullement limitatif.

La figure 1, de ce dessin, montre en coupe suivant l'axe du pignon, avec parties arrachées et parties schématiques, une direction assistée conforme à l'invention.

La figure 2, enfin, est une coupe suivant II—II figure 1.

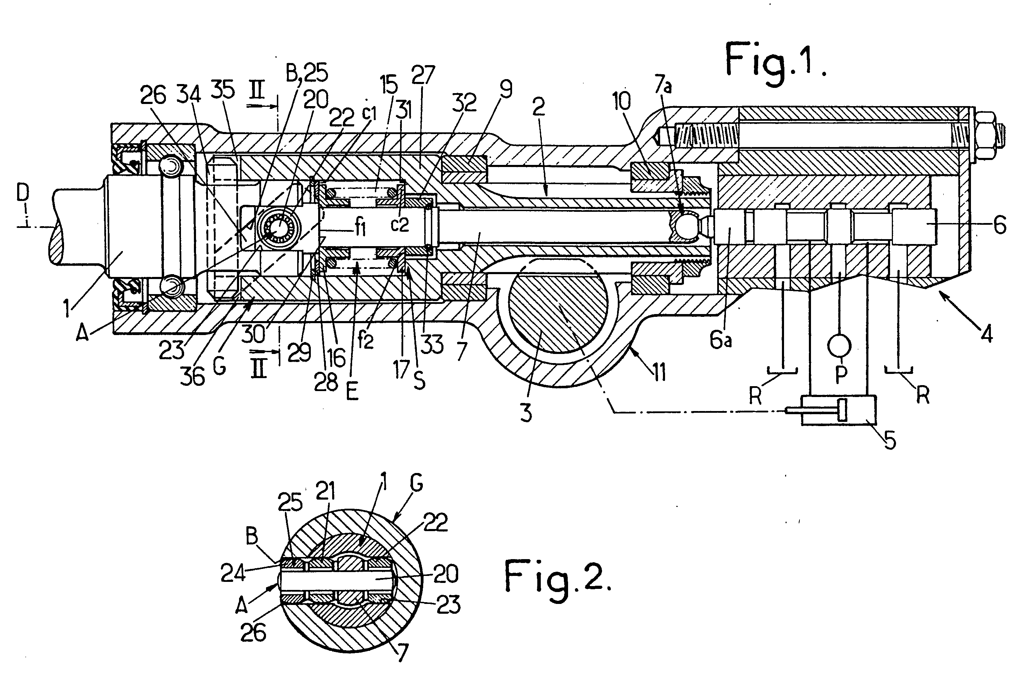

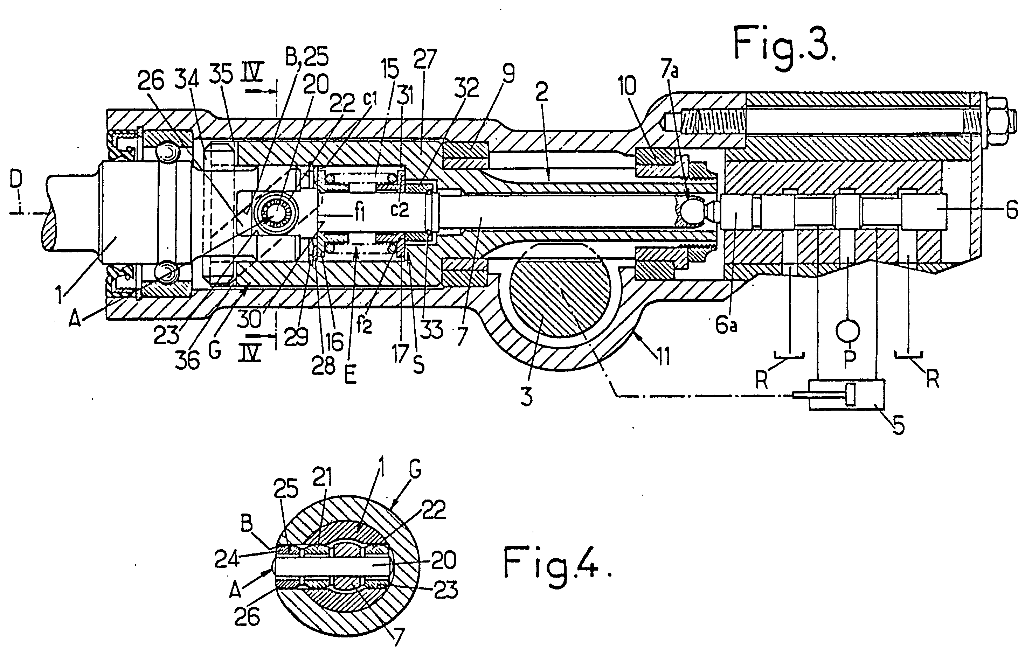

En se reportant au dessin, plus particulièrement à la figure 1, on peut voir une direction assistée comportant un arbre de commande rotatif 1 propre à entraîner un pignon 2 coopérant avec une crémaillère 3.

Cette direction comporte un distributeur 4 de liquide sous pression fourni par une source P. Ce distributeur 4 sert à commander un moteur d'assistance, formé par un vérin 5, des déplacements de la crémaillère 3. Le mode de distribution représenté sur le dessin est du type à centre fermé; ce mode de distribution pourrait aussi bien être du type à centre ouvert (qui ne nécessite pas d'accumulateur hydraulique).

Le distributeur 4 comprend un tiroir coulissant 6 coaxial au pignon 2, et situé, par rapport à ce dernier, du côté opposé à l'arbre 1.

Sur le dessin, seule une extrémité de l'arbre 1 a été représentée; il est clair que cet arbre 1 est généralement relié, de manière classique, par un joint de transmission à l'arbre directement commandé par le volant du véhicule.

Une tige de liaison 7 traverse axialement le pignon 2 et relie, par une articulation à rotule 7a, l'extrémité 6a du tiroir, voisine du pignon 2, à une pièce A liée en rotation à l'arbre 1, mais libre en coulissement par rapport à cet arbre.

Le pignon 2 est monté dans des paliers lisses 9 et 10 bloqués dans un boîtier fixe 11 abritant le pignon et la crémaillère.

La direction comporte des moyens élastiques E à double effet pour le rappel du tiroir 6 en position neutre; ces moyens élastiques E sont agencés sous la forme d'un ressort 15 disposé entre l'un des éléments constitués par la tige 7 (fig. 1) (ou par la pièce A) et une butée S fixe suivant la direction de l'axe D du pignon; l'ensemble est tel que le tiroir 6 et l'articulation 7a ne sont pas soumis à l'effort du ressort 15.

Ce ressort 15 est monté entre deux coupelles 16, 17, coulissant par rapport à la tige 7.

Ces coupelles sont disposées axialement entre deux zones de butées c1, c2, fixes suivant la direction de l'axe D et solidaires du boîtier 11.

Les zones de butée c1, c2 sont situées radialement vers l'extérieur.

Les coupelles 16 et 17 sont disposées également entre deux zones d'appui f1, f2, situées radialement vers l'intérieur par rapport à c1 et c2 et liées, au moins suivant la direction D, à la tige 7.

Le ressort 15 est formé par un ressort hélicoïdal qui entoure la tige 7. Le tiroir 6, comme visible d'après la figure 1, a un diamètre extérieur relativement réduit, nettement inférieur à celui du pignon 2.

La pièce A, reliée par la tige 7 à l'extrémité 6a du tiroir 6, est formée par un axe transversal 20 situé à l'extrémité de la tige 7 voisine de l'arbre 1. Cet axe 20 est solidaire de la tige 7 qu'il traverse suivant un diamètre. L'axe 20 porte deux galets 21, 22 (fig. 2), diamétralement opposés par rapport à la tige 7, propres à coopérer avec une fourche d'entraînement 23 solidaire de l'arbre de commande 1 et prévue à l'extrémité de ce dernier.

Comme visible sur la figure 2, l'axe 20 se prolonge radialement, d'un côté, au-delà de l'arbre 1 pour coopérer par l'intermédiaire d'un autre galet 24 avec une surface d'appui B.

Cette surface d'appui B est formée par les faces inclinées 25, par rapport à l'axe D, des bords d'une lumière 26 prévue dans un organe G immobile suivant la direction axiale D.

Le pignon 2 est bloqué axialement, par rapport au boîtier 11, sur les paliers 9 et 10. Le corps du pignon 2 se prolonge, vers l'arbre 1, par une partie tubulaire 27, de diamètre plus important, propre à recevoir, dans son volume intérieur, l'extérieur de l'arbre 1 munie de la fourche 23.

L'organe G est avantageusement formé par cette partie tubulaire 27 immobile suivant la direction D.

Le ressort hélicoïdal 15 est monté directement autour de la tige 7, à l'intérieur de la partie tubulaire 27.

La coupelle 16 est arrêtée, axialement, par une rondelle 28 en appui unilatéral contre une bague fendue élastique 29 ancrée dans une gorge de la paroi intérieure de la partie tubulaire 27. La face de la rondelle 28, propre à venir en appui contre la coupelle 16, forme la surface c1 dont il a été question précédemment.

La coupelle 16 est propre à venir également en appui notamment en position neutre du distributeur 6, contre un épaulement 30 de la tige 7. La face de cet épaulement venant en appui contre la coupelle forme la surface f1.

La coupelle 17 est propre à venir en appui contre un épaulement 31 de la surface limitant le volume intérieur de la partie tubulaire 27; la face de cet épaulement 31 venant en appui contre la coupelle forme la surface c2.

La coupelle 17 est propre à venir également en appui contre une bague 32, entourant la tige 7, et arrêtée axialement, par rapport à celle-ci, par un jonc élastique 33 ancré dans une gorge de la tige. La face de la bague 32 venant en appui contre la coupelle 17 forme la surface f2.

Les déplacements angulaires relatifs entre l'arbre 1 et la partie tubulaire 27 sont limités par une goupille 34 traversant diamétralement l'arbre 1 et solidaire en rotation de cet arbre. La goupille 34 est propre à coopérer avec des encoches 35, 36, diamétralement opposées, prévues à l'extrémité de la partie tubulaire 27.

Les extrémités de la goupille 34, qui font saillie radialement sur l'arbre 1, sont engagées respectivement dans ces encoches 35, 36, ouvertes, suivant la direction axiale, du côté opposé au pignon 2. La largeur périphérique de ces encoches 35, 36 est supérieure au diamètre de la goupille 34, de telle sorte que cette goupille ne vient en butée avec les bords longitudinaux d'une des encoches qu'après un mouvement angulaire relatif d'amplitude déterminée de l'arbre 1 par rapport à la partie tubulaire 27 et donc après un déplacement longitudinal déterminé de la tige 7 et du tiroir 6.

Le fonctionnement de la direction assistée représentée sur les figures 1 et 2 est le suivant.

Lorsqu'un couple de manoeuvre suffisant est appliqué sur l'arbre 1, la coopération de l'axe 20 et du galet 24 avec les bords inclinés de la lumière 26 provoque un coulissement axial de la tige 7 et du tiroir 6 en comprimant le ressort 15. Selon le sens du couple de manoeuvre et par suite du déplacement de la tige 7, l'une des coupelles 16 ou 17 se déplace avec cette tige.

Le déplacement du tiroir 6, lié à la tige 7, assure la distribution engendrant l'assistance hydraulique souhaitée.

L'invention fournit une direction assistée ayant un faible encombrement radial, d'une fabrication facile et d'une bonne fiabilité, grâce notamment au tiroir cylindrique 6 de dimension réduite.

On est assuré d'un fonctionnement fidèle grâce à l'absence de contrainte sur le tiroir 6 et sur sa liaison articulée avec la tige 7 puisque l'effort de rappel exercé par le ressort 15 n'est pas transmis à ces pièces délicates, au niveau desquelles s'établit soit une étanchéité, soit un glissement.

En outre, grâce à l'effort de rappel exercé par le ressort 15, on obtient une direction assistée dans laquelle le déplacement axial du tiroir 6 dépend du couple de manoeuvre exercé sur l'arbre 1. Une précontrainte du ressort 15 en position neutre procure un seuil du couple de manoeuvre en-deça duquel le tiroir et la tige (et éventuellement le pignon) ne coulissent pas, assurant l'absence d'assistance et l'entraînement mécanique positif entre volant et crémaillère dans les conditions de roulage les plus courantes du véhicule.

## Revendications

1. Direction assistée à arbre de commande rotatif (1) propre à entraîner un pignon (2) coopérant avec une crémaillère (3) comportant:

— premièrement, un distributeur (4) de fluide sous pression pour la commande d'un moteur d'assistance (5) du déplacement de la crémaillère, lequel distributeur comprend un tiroir coulissant (6), coaxial au pignon, et situé du côté opposé à l'arbre;

— deuxièmement, un moyen de liaison (7) reliant une extrémité du tiroir à une pièce (A) liée en rotation audit arbre ladite pièce (A) étant propre à coopérer, lors de la rotation, avec une surface d'appui (B) immobile suivant la direction de l'axe du pignon et inclinée par rapport à cet axe, de telle sorte que la pièce (A) citée se déplace axialement en réponse à un mouvement de rotation de l'arbre;

— troisièmement, des moyens élastiques (E) à double effet, pour le rappel du tiroir (6) en position neutre, agencés sous la forme d'au moins un ressort (15) disposé entre l'un des éléments constitués par le moyen de liaison (7) ou la pièce (A), et une butée (S) fixe suivant la direction de l'axe du pignon, l'ensemble étant tel que le tiroir et l'articulation ne sont pas sousmis à l'effort du ressort, caractérisée par le fait que:

— premièrement, le moyen de liaison est une tige (7) traversant axialement le pignon et la tige (7) relie, notamment par une articulation (7a), l'extrémité du tiroir à la pièce (A) susdite et que,

— deuxièmement, la pièce (A) est formée par un axe transversal (20) propre à coopérer, notamment par l'intermédiaire de galets (21, 22), avec une fourche d'entraînement (23) solidaire de l'arbre de commande (1), cet axe (20) se prolongeant radialement au-delà de l'arbre de commande pour coopérer, notamment par l'intermédiaire d'un galet (24), avec la susdite surface d'appui (B) formée par les bords, inclinés par rapport à l'axe du pignon, d'une lumière (26) prévue dans un organe (G) immobile suivant la direction axiale du pignon,

— troisièmement, le pignon (2) est bloqué axialement et la surface d'appui susdite (B) est notamment formée par les bords inclinés de la lumière (26) prévue dans une partie tubulaire (27) du corps de pignon et,

— quatrièmement, les moyens élastiques à double effet sont constitués par un seul ressort (15).

2. Direction assistée, selon la revendication 1, caractérisée par le fait que le ressort (15) à double effet est monté entre deux coupelles (16, 17) coulissant librement par rapport au susdit élément (tige ou pièce) et disposées axialement d'une part entre deux zones de butée $(c_1, c_2)$, fixes suivant la direction de l'axe du pignon, et situées radialement vers l'extérieur, et d'autre part entre deux zones d'appui $(f_1, f_2)$ liées axialement audit élément, et situées radialement vers l'intérieur.

3. Direction assistée selon la revendication 1 ou 2, caractérisée par le fait que le ressort (15) entoure la tige (7).

4. Direction assistée selon l'ensemble des revendications 2 et 3, caractérisée par le fait que les zones de butées $(c_1, c_2)$, pour les susdites coupelles (16, 17), sont formées par une rondelle (28) en appui contre une bague élastique (29) ancrée dans une gorge de la paroi intérieure de la partie tubulaire (27) du corps de pignon et par un épaulement (31) de cette partie tubulaire, tandis que les susdites zones d'appui $(f_1, f_2)$ sont formées par un épaulement (30) de la tige et par une bague (32) arrêtée axialement sur la tige.

## Patentansprüche

1. Servolenkung mit einer drehbaren Lenksäule (1) für den Antrieb eines mit einer Zahnstange (3) zusammenwirkenden Ritzels (2), ferner mit folgenden Teilen:

I. Einem Druckflüssigkeitsverteiler (4) zur Steuerung eines Hilfsantriebs (5) für die Verschiebung der Zahnstange, wobei der Druckflüssigkeitsverteiler einen koaxial zu dem Ritzel auf der der Lenksäule gegenüberligenden Seite angeordneten Gleitschieber (6) umfaßt;

II. einem Verbindungsteil (7), welches ein Ende des Gleitschiebers mit einem Mitnehmerteil (A) verbindet, das drehfest mit der Lenksäule verbunden ist und bei seiner Drehbewegung mit einer in Richtung der Achse des Ritzels unbeweglichen und zu ihr geneigten Stützfläche derart zusammenwirkt, daß das Mitnehmerteil (A) sich bei einer Drehbewegung der Lenksäule axial verschiebt;

III. doppeltwirkenden elastischen Mitteln (E) zur Rückführung des Gleitschiebers (6) in eine neutrale Position, die von wenigstens einer Feder (15) gebildet sind, die zwischen einem der von dem Verbindungsteil (7) oder dem Mitnehmerteil (A) gebildeten Elemente und einem in Richtung der Achse des Ritzels festen Anschlag (S) angeordnet ist, wobei die Gesamtanordnung so getroffen ist, daß der Gleitschieber und die Gelenkverbindung der Kraft der Feder nicht ausgesetzt sind,

gekennzeichnet durch folgende Merkmale:

I. Das Verbindungsteil ist eine Stange (7), die das Ritzel axial durchdringt und über eine Gelenkverbindung (7a) das Ende des Gleitschiebers mit dem genannten Mitnehmerteil (A) verbindet,

II. das Mitnehmerteil (A) ist als transversale Achse (20) ausgebildet, die—vorzugsweise über Rollen (21, 22)—mit einer fest mit der Lenksäule (1) verbundenen Mitnehmergabel (23) zusammenwirkt, wobei diese Achse (20) radial über die Lenksäule hinaus verlängert ist und—vorzugsweise über eine Rolle (24)—mit der genannten Stützfläche (B) zusammenwirkt, die von den relativ zur Achse des Ritzels geneigten Randflächen einer Öffnung (26) gebildet sind, welche in einem in Achsenrichtung des Ritzels unbeweglichen Organ (G) angebracht ist,

III. das Ritzel (2) ist axial blockiert und die genannte Stützfläche (B) wird vorzugsweise von den geneigten Rändern der in einem röhrenförmigen Teil (27) des Ritzelkörpers vorgesehenen Öffnung (26) gebildet,

IV. die doppeltwirkenden elastischen Mittel bestehen aus einer einzigen Feder (15).

2. Servolenkung nach Anspruch 1, dadurch gekennzeichnet, daß die doppeltwirkende Feder (15) zwischen zwei Schalen (16, 17) montiert ist, die relativ zu dem genannten Element (Stange oder Mitnehmerteil) frei gleitbar sind und axial einerseits zwischen zwei in Achsenrichtung des Ritzels festen und radial nach außen weisenden Anschlagzonen ($c_1$, $c_2$) und andererseits zwischen zwei axial mit dem genannten Element verbundenen und radial nach innen weisenden Anschlagzonen ($f_1$, $f_2$) angeordnet sind.

3. Servolenkung nach Anspruch 1 oder 2, dadurch gekennzeichnet, daß die Feder (15) die Stange (7) umgibt.

4. Servolenkung nach der Gesamtheit der Ansprüche 2 und 3, dadurch gekennzeichnet, daß die erstgenannten Anschlagzonen ($c_1$, $c_2$) für die genannten Schalen (16, 17) von einer sich gegen einen in einer Kehle der Innenwandung des röhrenförmigen Teils (27) des Ritzelkörpers verankerten elastischen Ring (29) abstützenden Scheibe (28) und einer Schulter (31) dieses röhrenförmigen Teils gebildet sind, während die zweitgenannten Anschlagzonen ($f_1$, $f_2$) von einer Schulter (30) der Stange und einem auf der Stange axial arretierten Ring (32) gebildet sind.

## Claims

1. Power steering with rotary drive shaft (1) adapted to drive a pinion (2) cooperating with a rack, comprising:

— firstly, a distributor (4) of pressurized fluid for controlling a motor (5) assisting the movement of the rack, which distributor comprises a slide valve (6) coaxial with the pinion and situated on the side opposite the shaft;

— secondly, a connection means (7) connecting one end of the slide valve to a piece (A) linked in rotation with said shaft, said piece (A) being adapted to cooperate, when it rotates, with a bearing surface (B) immovable in the direction of the axis of the pinion, and sloping with respect to this axis, so that said piece (A) move axially in response to a rotational movement of the shaft;

— thirdly, resilient double-acting means (E) for returning the slide valve (6) to the neutral position, provided in the form of a spring (15) disposed between one of the elements formed by the connection means (7) or the piece (A), and a stop (S) fixed in the direction of the axis of the pinion, the whole being such that the slide valve and the jointed coupling are not subjected to the force of the spring, characterized by the fact that;

— firstly, the connection means is a rod (7) passing axially through the pinion and connecting, particularly by means of a jointed coupling (7a), one end of the slide valve to said piece (A) and,

— secondly, said piece (A) is formed by a transverse pin (20) adapted to cooperate, particularly through rollers (21, 22), with a drive fork (23) integral with the drive shaft (1), this pin (20) being extended radially beyond the drive shaft so as to cooperate, particularly through a roller (24), with said bearing surface (B) formed by the edges, sloping with respect to the pinion axis, of an aperture (26) provided in a member (G) immovable in the axial direction of the pinion,

— thirdly, the pinion (2) is locked axially and said bearing surface (B) is in particular formed by the sloping edges of the aperture (26) provided in a tubular part (27) of the pinion body and,

— fourthly, the resilient double acting means are formed by a single spring (15).

2. Power steering, as claimed in claim 1, characterized by the fact that the double-acting spring (15) is mounted between two cups (16, 17) sliding freely with respect to said element (rod or piece) and disposed axially on the one hand between two stop zones ($c_1$, $c_2$) fixed in the direction of the axis of the pinion and situated radially outwardly and, on the other hand, between two bearing zones ($f_1$, $f_2$) connected axially to said element and situated radially inwardly.

3. Power steering as claimed in claim 1 or 2, characterized by the fact that the spring (15) surrounds the rod (7).

4. Power steering as claimed in the whole of claim 2 and claim 3 characterized by the fact that the stop zones ($c_1$, $c_2$) for said cups (16, 17) are formed by a washer (28) abutting against a resilient ring (29) anchored in a groove of the inner wall of the tubular part (27) of the pinion body and by a shoulder (31) of this tubular part, whereas said bearing zones ($f_1$, $f_2$) are formed a shoulder (30) of the rod, and by a ring (32) fixed axially on the rod.

Fig.1.

Fig.2.

Fig.3.

Fig.4.

0 0021 950